# EUROPÄISCHE PATENTANMELDUNG

(11) **EP 1 223 320 A2**
(43) Veröffentlichungstag der Anmeldung: **17.07.2002**
(21) Anmeldenummer: 01129920.3
(22) Anmeldetag: 15.12.2001
(51) Int. Cl.: F02D 21/08

(54) **Verfahren und Vorrichtung für Abgasrückführungsregelung**

(30) Priorität: 13.01.2001 DE 10101343
(71) Anmelder: DaimlerChrysler AG, 70567 Stuttgart (DE)
(72) Erfinder: Pfaff, Rüdiger, 70499 Stuttgart (DE); Wiltschka, Joachim, 70736 Fellbach (DE)

(57) **Zusammenfassung**

1. Verfahren und Vorrichtung zur Abgasrückführungsregelung.
2.1. Die Erfindung betrifft ein Verfahren zur Abgasrückführungsregelung bei einem Verbrennungsmotor mit Aufladeeinrichtung, Abgasrückführleitung und Abgasrückführventil, bei dem die Schritte des Einstellens der Aufladeeinrichtung und des Einstellens des Abgasrückführventils mittels Stellsignalen vorgesehen sind.
2.2. Erfindungsgemäß werden die Stellsignale für die Aufladeeinrichtung und das Abgasrückführventil anhand einer gemeinsamen Stellgröße eines gemeinsamen Reglers erzeugt.
2.3. Verwendung z.B. bei Kraftfahrzeugen mit aufgeladenem Dieselmotor.

## Beschreibung

Die Erfindung betrifft ein Verfahren zur Abgasrückführungsregelung bei einem Verbrennungsmotor mit Aufladeeinrichtung, Abgasrückführleitung und Abgasrückführventil, bei dem die Schritte des Einstellens der Aufladeeinrichtung und des Einstellens des Abgasrückführventils mittels Stellsignalen vorgesehen sind. Die Erfindung betrifft auch eine Vorrichtung zur Durchführung des Verfahrens zur Abgasrückführungsregelung mit einer Regeleinrichtung zum Ansteuern einer Stelleinheit der Aufladeeinrichtung sowie einer Stelleinheit des Abgasrückführventils.

Aus der deutschen Offenlegungsschrift DE 198 01 395 A1 ist eine Vorrichtung zur Ladedruckregelung mittels eines Abgasturboladers und zur Abgasrückführungsregelung bei einem Dieselmotor bekannt. Eine Regeleinrichtung regelt dort in einem ersten, niedrigen Last- und/oder Drehzahlbereich die Abgasrückführung und in einem zweiten, höheren Last- und/oder Drehzahlbereich den Ladedruck. Hierzu weist die Regeleinrichtung einen ersten Regler mit einer Stellgröße zum Verändern eines variablen Strömungsquerschnitts der Turbine des Abgasturboladers auf. Im ersten, niedrigen Drehzahlbereich wird über die Einstellung dieses variablen Strömungsquerschnitts mit dem Luftmassenstrom im Ansaugrohr als Führungsgröße eine Abgasrückführungsrate eingestellt. Im zweiten, höheren Last- und/oder Drehzahlbereich wird über die Einstellung dieses variablen Strömungsquerschnitts mit dem Ladedruck als Führungsgröße der Ladedruck geregelt. Ein zusätzlicher, zweiter Regler, mit dem ein Abgasrückführungsventil eingestellt werden kann, kann vorgesehen sein, um eine Abgasrückführungsregelung auch noch im zweiten, höheren Last- und/oder Drehzahlbereich neben der dann erfolgenden Ladedruckregelung zu ermöglichen.

Bei solchen bekannten Abgasrückführungsregelungen wird die maximal mögliche Dynamik des Verbrennungsmotors nicht genutzt. Im ersten, niedrigen Last- und/oder Drehzahlbereich muss, um eine präzise Einstellung der Abgasrückführrate zu erreichen, eine Verschlechterung des Ansprechverhaltens des Dieselmotors in Kauf genommen werden. Im zweiten, höheren Last- und/oder Drehzahlbereich, wenn die Einstellung des Abgasrückführventils mit dem zweiten, zusätzlichen Regler vorgenommen wird, besteht die Gefahr, dass die beiden unabhängigen Regler gegeneinander arbeiten und die Dynamik des Verbrennungsmotors verschlechtern.

Mit der Erfindung soll ein Verfahren und eine Vorrichtung zur Abgasrückführungsregelung bereitgestellt werden, mit der eine verbesserte Abgasemission bei gleichzeitig verbessertem Ansprechverhalten eines Verbrennungsmotors erreicht wird.

Erfindungsgemäß ist hierzu ein Verfahren zur Abgasrückführungsregelung bei einem Verbrennungsmotor mit Aufladeeinrichtung, Abgasrückführleitung und Abgasrückführventil vorgesehen, bei dem die Schritte des Einstellens der Aufladeeinrichtung und des Einstellens des Abgasrückführventils mittels Stellsignalen vorgesehen sind und bei dem die Stellsignale für die Aufladeeinrichtung und das Abgasrückführventil anhand einer gemeinsamen Stellgröße eines gemeinsamen Reglers erzeugt werden.

Die Aufladeeinrichtung und das Abgasrückführventil werden vom Regler als gemeinsames Stellglied behandelt, wodurch stets ein im Betriebspunkt festes und gewünschtes Verhältnis zwischen der Einstellung der Aufladeeinrichtung und der Einstellung des Abgasrückführventils erzielt wird. Damit ist eine schnelle Einstellung der Aufladeeinrichtung möglich, ohne eine Verschlechterung der Abgasrückführung befürchten zu müssen, wodurch sich auch bei hohen Abgasrückführraten eine verbesserte Dynamik des Verbrennungsmotors ergibt. Da der Abgasrückführbetrieb keine Verschlechterung der Dynamik mit sich bringt, ist eine Erweiterung des Abgasrückführbereichs in höhere Last- und/oder Drehzahlbereiche möglich. Indem keine getrennten Regler für die Aufladeeinrichtung und das Abgasrückführventil vorgesehen sind, besteht keine Gefahr, dass zwei Regler gegeneinander arbeiten. Das Verhältnis der Stellsignale für die Aufladeeinrichtung und das Abgasrückführventil ist über den Betriebsbereich des Verbrennungsmotors gesehen nicht konstant sondern kann sich in Abhängigkeit des Betriebspunkts des Motors ändern.

In Weiterbildung der Erfindung ist vorgesehen, dass ein Stellsignal für die Aufladeeinrichtung zum Erhöhen des von der Aufladeeinrichtung erzeugten Ladedrucks und/oder der von der Aufladeeinrichtung geförderten Luftmasse mit einem Stellsignal für das Abgasrückführventil zum Verringern des Strömungsquerschnitts der Abgasrückführleitung verknüpft ist und dass ein Stellsignal für die Aufladeeinrichtung zum Verringern des von der Aufladeeinrichtung erzeugten Ladedrucks und/oder der von der Aufladeeinrichtung geförderten Luftmasse mit einem Stellsignal für das Abgasrückführventil zum Vergrößern des Strömungsquerschnitts der Abgasrückführleitung verknüpft ist.

Indem solchermaßen eine Wirkrichtung der Stellsignale zueinander vorgegeben ist, kann eine einfache und schnelle Einstellung der Aufladeeinrichtung und des Abgasrückführventils erreicht werden, da lediglich ein Betrag der Stellsignale zueinander variabel ist. Beispielsweise kann ein Stellsignal für die Auflageeinrichtung invertiert werden, um als Stellsignal für das Abgasrückführventil verwendet zu werden. Beispielsweise wird bei einem Volllastsprung der Turbolader maximal angesteuert und gleichzeitig wird das Abgasrückführventil vollständig geschlossen.

In Weiterbildung der Erfindung ist vorgesehen, dass die Stellsignale anhand eines Sollwerts einer Abgasrückführrate und eines Kennfelds bestimmt werden, in dem für einen aktuellen Betriebszustand des Verbrennungsmotors und jeden Sollwert der Abgasrückführrate ein Verhältnis eines Einstellwerts für das Abgasrückführventil zu einem Einstellwert für die Aufladeeinrichtung abgelegt ist.

Die Verwendung eines Kennfelds ermöglicht eine Anpassung an verschiedene Betriebspunkte des Verbrennungsmotors. Ein Sollwert der Abgasrückführung wird beispielsweise von einem Motorsteuergerät vorgegeben und ausgehend hiervon wird durch ein Vorsteuerkennfeld und in Abhängigkeit des Last- und/oder Drehzahlzustands das Verhältnis der Einstellwerte ermittelt. Die Stellsignale sind dadurch nach Art eines Softwaregetriebes verknüpft, das für verschiedene Betriebspunkte unterschiedliche Übersetzungen aufweist.

In Weiterbildung der Erfindung ist vorgesehen, dass in Abhängigkeit des Betriebszustandes des Verbrennungsmotors veränderliche minimale und/oder veränderliche maximale Stellsignalwerte für das Stellsignal der Aufladeeinrichtung vorgegeben sind.

Durch diese Maßnahmen wird ein besseres Ansprechverhalten des Verbrennungsmotors erreicht, da ein Verstellbereich der Aufladeeinrichtung voll ausgenutzt werden kann, ohne eine deutliche Verschlechterung des Wirkungsgrads der Aufladeeinrichtung durch nicht angepasste Extremstellungen befürchten zu müssen. Beispielsweise sind bei einem Abgasturbolader mit variabler Turbinengeometrie für höhere Drehzahlen engere Einstellgrenzen als für niedrige Drehzahlen vorgesehen.

In Weiterbildung der Erfindung ist vorgesehen, dass nach dem Vorgeben eines, einer Lasterhöhung entsprechenden Sollzustands ausgehend von einem Teillastbetrieb mit einer Abgasrückführrate größer als null, die Stellsignale für die Aufladeeinrichtung und das Abgasrückführventil sofort auf die dem vorgegebenen Sollzustand zugeordneten Werte gesetzt werden, eine Kraftstoffeinspritzmenge aber erst dann erhöht wird, wenn eine vorbestimmte Anzahl von Arbeitsspielen des Verbrennungsmotors erfolgt ist.

Diese Maßnahmen dienen zum Verhindern eines Rauchstoßes bei der Beschleunigung aus dem Abgasrückführbetrieb, indem durch eine vorbestimmte Anzahl von Arbeitsspielen des Verbrennungsmotors zunächst im Saugrohr vorhandenes Abgas abgeführt wird und erst dann die Einspritzmenge erhöht wird. Die Anzahl der Arbeitsspiele ist dabei vom Volumen des Luftsammlers im Ansaugweg abhängig. Beispielsweise wird auch ein besseres Dynamikverhalten bei einer Beschleunigung aus dem Teillastbetrieb erreicht, indem eine Turbinengeometrie maximal verstellt wird und gleichzeitig das Abgasrückführventil schnell geschlossen wird.

In Weiterbildung der Erfindung ist vorgesehen, dass Stellsignale für eine Drosselklappe im Ansaugweg anhand der gemeinsamen Stellgröße des gemeinsamen Reglers erzeugt werden. Falls eine Drosselklappe im Ansaugweg zur Bereitstellung einer Druckdifferenz zwischen Ansaugweg und Abgasleitung benötigt wird, kann diese ebenfalls mit dem gemeinsamen Regler angesteuert werden. Dadurch ist eine schnelle und präzise Einstellung ermöglicht.

In Weiterbildung der Erfindung ist vorgesehen, dass eine Regelcharakteristik des gemeinsamen Reglers in Abhängigkeit des Betriebszustands des Motors verändert wird.

Beispielsweise werden im reinen Abgasrückführbetrieb bei niedrigen Drehzahlen und Lasten defensive Regelparameter verwendet, bei ausgesprochenem Turboladerbetrieb kommen dahingegen aggressive Regelparameter zum Einsatz. Dadurch kann einerseits eine hohe Regelgüte im Abgasrückführbetrieb und andererseits ein dynamisches Ansprechverhalten des Verbrennungsmotors im Turboladerbetrieb erreicht werden.

Das der Erfindung zugrundeliegende Problem wird auch mit einer Vorrichtung zur Durchführung des erfindungsgemäßen Verfahrens zur Abgasrückführungsregelung mit einer Regeleinrichtung zum Ansteuern einer Stelleinheit der Aufladeeinrichtung sowie einer Stelleinheit des Abgasrückführventils gelöst, bei der die Regeleinrichtung einen gemeinsamen Regler für die Aufladeeinrichtung und das Abgasrückführventil mit einer gemeinsamen Stellgröße und Mittel zum Erzeugen der Stellsignale für die Stelleinheiten der Aufladeeinrichtung und des Abgasrückführventils anhand der gemeinsamen Stellgröße aufweist.

Weitere Merkmale und Vorteile der Erfindung ergeben sich aus den Ansprüchen und der folgenden Beschreibung im Zusammenhang mit der Zeichnung. In der Zeichnung zeigt:
- Fig. 1: eine schematische Darstellung einer Vorrichtung zur Abgasrückführungsregelung gemäß einer bevorzugten Ausführung der Erfindung und
- Fig. 2: eine schematische Darstellung einer Steuerung zum Verhindern eines Rauchstoßes in der Vorrichtung der Fig. 1.

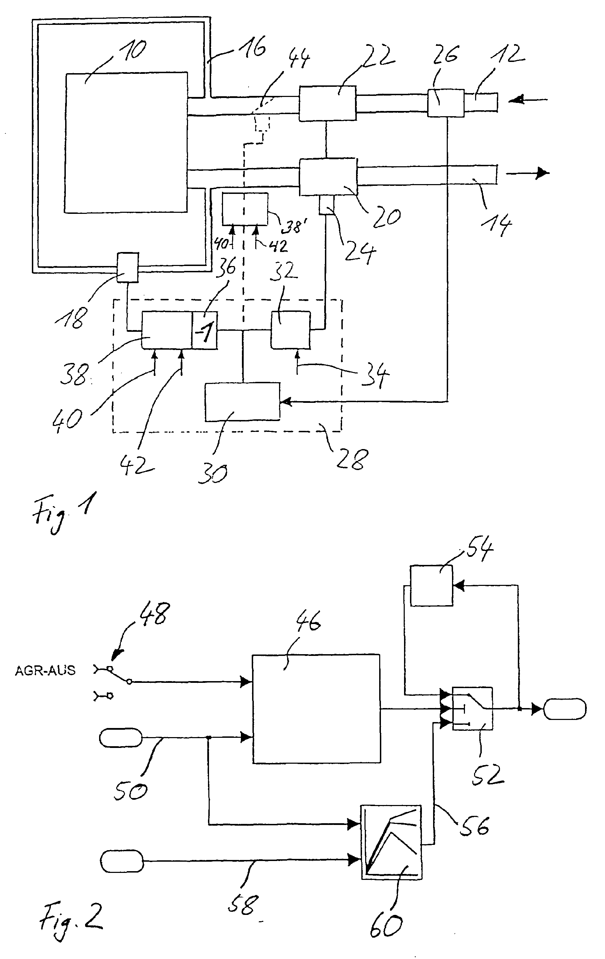

In der schematischen Darstellung der Fig. 1 ist ein Dieselmotor 10 dargestellt, der eine Ansaugleitung 12 und eine Abgasleitung 14 aufweist. Die Abgasleitung 14 und die Ansaugleitung 12 sind durch eine Abgasrückführleitung 16 miteinander verbunden. In der Abgasrückführleitung 16 ist ein Abgasrückführventil 18 angeordnet, mit dem der Strömungsquerschnitt der Abgasrückführleitung verändert werden kann. Der Dieselmotor 10 ist mit einem Abgasturbolader mit einer in der Abgasleitung angeordneten Turbine 20 und einem in der Ansaugleitung angeordneten Verdichter 22 versehen. Die Turbine 20 weist eine variable Turbinengeometrie auf, die mittels eines Stellglieds 24 eingestellt werden kann. In der Ansaugleitung 12 ist ein Luftmassenmesser 26 vorgesehen, der den, die Ansaugleitung 12 durchströmenden Luftmassenstrom erfasst. Der gemessene Luftmassenstrom wird an eine Regeleinrichtung 28 übergeben, die die Stellsignale für die Stelleinheit 24 der Turbine 20 sowie für das Abgasrückführventil 18 erzeugt.

Hierzu weist die Regeleinheit 28 einen Regler 30 auf, der als Führungsgröße den Luftmassenstrom in der Ansaugleitung 12 verwendet. In Abhängigkeit eines vorgegebenen Sollwerts und des mit dem Luftmassenmesser 26 erfassten Ist-Werts des Luftmassenstroms gibt der Regler 30 eine Stellgröße aus. Diese Stellgröße wird in der Regeleinheit 28 weiter verarbeitet, um die Stellsignale für das Stellglied 24 der Turbine 20 sowie das Stellsignal für das Abgasrückführventil 18 zu erzeugen.

Die Stellgröße des Reglers 30 wird einerseits einem Begrenzer 32 zugeführt, der die Stellgröße auf einen minimalen bzw. maximalen Wert begrenzt und dann als Stellsignal zu dem Stellglied 24 der Turbine 20 ausgibt. Durch den Begrenzer 32, der die Begrenzung der Stellgröße variabel in Abhängigkeit des aktuellen Last- und/oder Drehzahlzustands des Dieselmotors 10 vornimmt, werden Extremstellungen der Turbine 20 vermieden, die eine nicht hinnehmbare Wirkungsgradverschlechterung der Turbine 20 bewirken würden. Der Begrenzer 32 hat demnach die Funktion eines variablen Anschlags für die Verstellung der variablen Turbinengeometrie der Turbine 20. Indem die minimalen und maximalen Einstellwerte für die Turbine 20 in Abhängigkeit des aktuellen Last- und/oder Drehzahlzustands verändert werden, kann der Verstellbereich der Turbine 20 voll ausgenutzt werden, ohne unerwünschte Betriebszustände der Turbine 20 befürchten zu müssen. Der dem Begrenzer 32 zugeführte Last- und /oder Drehzahlzustand des Dieselmotors 10 ist durch den Pfeil 34 symbolisiert.

Andererseits wird die Stellgröße des Reglers 30 einem Invertierer 36 zugeführt und dort invertiert. Ändert sich beispielsweise im Abgasrückführbetrieb die Sollwertvorgabe auf einen neuen, höheren Wert des Luftmassenstroms, muss das Abgasrückführventil 18 geschlossen werden. Gleichzeitig wird die Turbine 20 entgegengesetzt angesteuert, um den erhöhten Luftmassenstrom zu erzeugen. Die für das Stellglied 24 der Turbine 20 vorgesehene Stellgröße wird daher invertiert, um sie bei der Erzeugung eines Stellsignals für das Abgasrückführventil 18 zu verwenden.

Mit der Invertierung der Stellgröße für die Ansteuerung der Turbine 20 im Invertierer 36 wird nur die Wirkrichtung des Stellglieds 24 und des Abgasrückführventils 18 festgelegt. Das gewünschte Verhältnis der Stellsignalwerte für das Abgasrückführventil 18 und zu den Stellsignalwerten für das Stellglied 24 der Turbine 20 wird im Funktionsblock 38 vorgenommen. Der Funktionsblock 38 enthält ein Kennfeld, in dem für jeden gewünschten Sollwert der Abgasrückführrate das richtige Verhältnis der Einstellung der Turbine 20 zu der Einstellung des Abgasrückführventils 18 über verschiedenen Last- und/oder Drehzahlzuständen des Dieselmotors 10 abgelegt ist. Die gewünschte Abgasrückführrate ist durch den Pfeil 40 symbolisiert und wird dem Funktionsblock 38 von einer Motorsteuerung zugeführt. Der Last- und/oder Drehzahlzustand des Dieselmotors 10 ist durch den Pfeil 42 symbolisiert und wird ebenfalls von der Motorsteuerung ausgegeben. Nachdem in dem Funktionsblock 38 das Stellsignal für das Abgasrückführventil 18 im richtigen Verhältnis zu dem Stellsignal für das Stellglied 24 der Turbine 20 erzeugt ist, wird es an das Abgasrückführventil 18 ausgegeben.

Der Funktionsblock 38 kann darüber hinaus weitere Korrekturen des Stellsignals für das Abgasrückführventil 18 vornehmen, beispielsweise anhand eines Atmosphärendrucks, einer Lufttemperatur und/oder einer Kühlwassertemperatur des Dieselmotors 10.

Der Regler 30 ist als PI-Regler ausgeführt, wobei die Regelcharakteristik des Reglers 30 in Abhängigkeit des Betriebszustands des Dieselmotors 10 verändert werden kann. So wird aufgrund des drastisch unterschiedlichen Verhaltens der Regelstrecke im Abgasrückführbetrieb im Vergleich zum ausgesprochenen Turboladerbetrieb die Regelcharakteristik zwischen diesen beiden Betriebsarten umgeschaltet. Im ausgesprochenen Turboladerbetrieb ohne Abgasrückführung wird der Regler 30 mit aggressiven Regelparametern betrieben. Im Abgasrückführbetrieb werden dahingegen defensive Regelparameter verwendet. Dadurch kann im Turboladerbetrieb auch ein hoher Ladedruck in kurzer Zeit eingeregelt werden, um akzeptable Fahrleistungen eines mit dem Dieselmotor 10 ausgerüsteten Fahrzeugs zu erreichen. Andererseits wird eine präzise Abgasrückführung im Abgasrückführbetrieb erreicht.

Eine in der Ansaugleitung 12 gestrichelt eingezeichnete Drosselklappe 44 kann vorgesehen sein, um ein erweitertes Druckgefälle zwischen Abgasleitung 14 und Ansaugleitung 12 hervorzurufen. Das Stellsignal für die Drosselklappe 44 wird ebenfalls anhand der Stellgröße des gemeinsamen Reglers 30 erzeugt. Auch in diesem Fall gibt der Regler 30 nur eine Stellgröße aus, die für die Einstellung des Abgasrückführventils 18, der Turbine 20 und der Drosselklappe 44 verwendet wird.

Um einen Rauchstoß bei der Beschleunigung aus dem Abgasrückführbetrieb, beispielsweise bei Teillast und einer Abgasrückführrate größer als null zu verhindert, werden zum einen das Stellglied 24 für die Turbine 20 sowie das Abgasrückführventil 18 ohne zeitliche Verzögerung auf die dem vorgegebenen Sollwert zugeordneten Einstellwerte gesetzt. Zum anderen wird eine Kraftstoffeinspritzmenge für den Dieselmotor 10 erst dann erhöht, wenn in der Ansaugleitung 12 vorhandenes Abgas durch den Dieselmotor 10 abgesaugt wurde. Hierzu wird eine vorbestimmte Anzahl von Arbeitsspielen des Verbrennungsmotors abgewartet, bis die Einspritzmenge erhöht wird. Die Anzahl der abgewarteten Arbeitsspiele hängt dabei vom Volumen der Ansaugleitung 12 ab.

In der schematischen Darstellung der Fig. 2 ist eine Steuerung in der Vorrichtung der Fig. 1 gezeigt, mit der diese Maßnahmen vorgenommen werden. Ein Zähler 46 erhält hierzu von einem Schalter 48 ein Signal, ob ein Abgasrückführbetrieb vorliegt oder nicht. Beim Beschleunigen aus dem Abgasrückführbetrieb, wird, wie ausgeführt, das Abgasrückführventil geschlossen, so dass der Schalter 48, wie dargestellt, sich in der Stellung AGR-Aus befindet und an den Zähler 46 ein Signal übergibt, dass kein Abgasrückführbetrieb mehr vorliegt. Über eine Verbindung 50 erhält der Zähler 46 auch die aktuelle Drehzahl des Dieselmotors 10. Der Zähler 46 zählt eine vorbestimmte Anzahl an Arbeitsspielen des Dieselmotors 10, die benötigt wird, um in der Ansaugleitung 12 vorhandenes Abgas abzusaugen. Erst nach Ablauf der vorbestimmten Anzahl an Arbeitsspielen des Dieselmotors 10 gibt der Zähler 46 ein entsprechendes Freigabesignal an eine Schalteinrichtung 52 weiter.

Mittels der Schalteinrichtung 52 wird dann die Umschaltung zwischen einer bisherigen Kraftstoffeinspritzmenge, die durch den Block 54 symbolisiert ist, und einer neuen, gewünschten Kraftstoffeinspritzmenge auf der Verbindung 56 vorgenommen. Die beim Beschleunigen eingestellte gewünschte Einspritzmenge wird anhand einer Fahrpedalstellung auf der Verbindung 58 und der Drehzahl auf der Verbindung 50 mittels eines Kennfelds 60 ermittelt. Erst nachdem die von dem Zähler 46 gezählte und vorbestimmte Anzahl an Arbeitsspielen des Dieselmotors 10 erfolgt ist, gibt dieser Zähler 46 das Freigabesignal an die Schalteinrichtung 52 aus, die daraufhin eine Kraftstoffeinspritzmenge von einer bisherigen Einstellung 54 auf die aktuelle Solleinstellung auf der Verbindung 56 umstellt.

## Patentansprüche

1. Verfahren zur Abgasrückführungsregelung bei einem Verbrennungsmotor mit Aufladeeinrichtung, Abgasrückführleitung und Abgasrückführventil, bei dem die Schritte des Einstellens der Aufladeeinrichtung und des Einstellens des Abgasrückführventils mittels Stellsignalen vorgesehen sind,
**dadurch gekennzeichnet, dass**
die Stellsignale für die Aufladeeinrichtung (20, 22) und das Abgasrückführventil (18) anhand einer gemeinsamen Stellgröße eines gemeinsamen Reglers (30) erzeugt werden.

2. Verfahren nach Anspruch 1,
**dadurch gekennzeichnet, dass**
ein Stellsignal für die Aufladeeinrichtung(20, 22) zum Erhöhen des von der Aufladeeinrichtung (20, 22) erzeugten Ladedrucks und/oder der von der Aufladeeinrichtung (20, 22) geförderten Luftmasse mit einem Stellsignal für das Abgasrückführventil (18) zum Verringern des Strömungsquerschnitts der Abgasrückführleitung (16) verknüpft ist und dass ein Stellsignal für die Aufladeeinrichtung (20, 22) zum Verringern des von der Aufladeeinrichtung (20, 22) erzeugten Ladedrucks und/oder der von der Aufladeeinrichtung (20, 22) geförderten Luftmasse mit einem Stellsignal für das Abgasrückführventil (18) zum Vergrößern des Strömungsquerschnitts der Abgasrückführleitung (16) verknüpft ist.

3. Verfahren nach Anspruch 1 oder 2,
**dadurch gekennzeichnet, dass**
die Stellsignale anhand eines Sollwerts einer Abgasrückführrate und eines Kennfelds bestimmt werden, in dem für einen aktuellen Betriebszustand des Verbrennungsmotors (10) und Sollwerte der Abgasrückführrate ein Verhältnis eines Einstellwerts für das Abgasrückführventil (18) zu einem Einstellwert für die Aufladeeinrichtung (20, 22) abgelegt ist.

4. Verfahren nach einem der vorstehenden Ansprüche,
**dadurch gekennzeichnet, dass**
in Abhängigkeit des Betriebszustandes des Verbrennungsmotors (10) veränderliche minimale und veränderliche maximale Stellsignalwerte für das Stellsignal der Aufladeeinrichtung (20, 22) vorgegeben sind.

5. Verfahren nach einem der vorstehenden Ansprüche,
**dadurch gekennzeichnet, dass**
nach dem Vorgeben eines, einer Lasterhöhung entsprechenden Sollzustands ausgehend von einem Teillastbetrieb mit einer Abgasrückführrate größer als Null die Stellsignale für die Aufladeeinrichtung (20, 22) und das Abgasrückführventil (18) sofort auf die dem vorgegebenen Sollzustand zugeordneten Werte gesetzt werden, eine Kraftstoffeinspritzmenge aber erst dann erhöht wird, wenn eine vorbestimmte Anzahl von Arbeitsspielen des Verbrennungsmotors (10) erfolgt ist.

6. Verfahren nach einem der vorstehenden Ansprüche,
**dadurch gekennzeichnet, dass**
Stellsignale für eine Drosselklappe (44) im Ansaugweg (12) anhand der gemeinsamen Stellgröße des gemeinsamen Reglers (30) erzeugt werden.

7. Verfahren nach einem der vorstehenden Ansprüche,
**dadurch gekennzeichnet, dass**
eine Regelcharakteristik des gemeinsamen Reglers (30) in Abhängigkeit des Betriebszustandes des Verbrennungsmotors (10) verändert wird.

8. Vorrichtung zur Durchführung des Verfahrens zur Abgasrückführungsregelung nach einem der vorstehenden Ansprüche, mit einer Regeleinrichtung (28) zum Ansteuern einer Stelleinheit (24) der Aufladeeinrichtung (20, 22) sowie einer Stelleinheit des Abgasrückführventils (18),
**dadurch gekennzeichnet, dass**
die Regeleinrichtung (28) einen gemeinsamen Regler (30) für die Aufladeeinrichtung (20, 22) und das Abgasrückführventil (18) mit einer gemeinsamen Stellgröße und Mittel (32, 36, 38) zum Erzeugen der Stellsignale für die Stelleinheiten (24) der Aufladeeinrichtung (20, 22) und des Abgasrückführventils (18) anhand der gemeinsamen Stellgröße aufweist.
